# EUROPÄISCHE PATENTSCHRIFT

(11) **EP 0 308 631 B1**
(45) Veröffentlichungstag und Bekanntmachung des Hinweises auf die Patenterteilung: **03.03.1993**
(21) Anmeldenummer: 88112518.1
(22) Anmeldetag: 02.08.1988
(51) Int. Cl.: B64G 1/66, B64G 1/44

(54) **Stellantrieb für eine an einem Satelliten angeordnete nachführbare Antenne, Sonnenkollektor o.ä.**
Servo actuator for an antenna, solar panel or such, connected to a satellite
Dispositif d'actionnement pour une antenne, un panneau solaire, ou autre, asservi à un satellite

(30) Priorität: 22.09.1987 DE 3731755
(43) Veröffentlichungstag der Anmeldung: 29.03.1989
(73) Patentinhaber: TELDIX GmbH, D-69046 Heidelberg (DE)
(72) Erfinder: Auer, Werner, Dr. Ing., D-6901 Wiesenbach (DE)
(74) Vertreter: Wiechmann, Manfred, Dipl.-Ing.

(56) Entgegenhaltungen:
- EP-A- 0 132 768
- DE-A- 3 500 716
- US-A- 3 252 023
- US-A- 4 076 191

## Beschreibung

Die Erfindung betrifft einen Stellantrieb für eine an einem Satelliten angeordnete nachführbare Antenne, Sonnenkollektor o.ä. nach der Gattung des Hauptanspruchs.

Stellantriebe dienen in der Satellitenanwendung zum Ausrichten von Antennen auf erd- oder raumfeste Punkte z.B. zum Nachführen eines Sonnenkollektors, welcher die Stromversorgung des Satelliten gewährleistet. Solche Elemente die sich außerhalb des Satelliten befinden, müssen mit hoher Präzision einstellbar und regelbar sein. Es sind Stellantriebe bekannt geworden, die diese hohe Genauigkeit erreichen, jedoch sehr aufwendig sind und mit ihren großen Gewicht die Nutzlast des Satelliten herabsetzen.

In der DE-OS 33 17 509 wird ein Stellantrieb für eine an einem Satelliten angeordnete nachführbare Antenne, Sonnenkollektor o.ä. beschrieben, bei dem
- eine innerhalb der Satellitenstruktur angeordnete Antriebseinheit, bestehend aus wenigstens einem Schrittmotor mit relativ großer radialer Ausdehnung, der einen axial gerichteten Luftspalt aufweist und dessen Rotor mit einer Antriebswelle verbunden ist,
- eine Lagereinheit zur axialen und radialen Lagerung der Welle, bestehend aus zwei mit konstanter Vorspannung eingestellten Wälzlagern,
- eine Schleifringanordnung, die auf der gemeinsamen Welle angeordnet ist, zur Übertragung von Signalen und/oder elektrischer Energie, wobei die Antriebseinheit in der Nähe der Satellitenaußenhaut, die Schleifringanordnung in einem von der satellitenaußenhaut entfernt liegenden Bereich im Inneren des Satelliten und die Lagereinheit zwischen Schleifringanordnung und Antriebseinheit angeordnet ist.

Bei der Übertragung großer elektrischer Leistung und/oder großer Signalmengen können bei dieser Anordnung Probleme dadurch auftreten, daß die hohle Antriebswelle die Vielzahl der zur Energie- oder Signalübertragung vom Sonnenkollektor oder von der Antenne in das Satelliteninnere oder umgekehrt notwendigen Drähte nicht aufnehmen kann und damit eine Begrenzung der Sonnenkollektor- oder der Antennenleistung gegeben ist.
Aufgabe der Erfindung ist es daher, einen Stellantrieb zu schaffen, bei dem auch größere Leistungen und/oder größere Signalmengen, unabhängig von der Anzahl und dem Querschnitt der Drähte, übertragen werden können.
Diese Aufgabe wird durch die im ersten Patentanspruch angegebenen Merkmale gelöst und erbringt die angestrebten Vorteile. Ein weiterer Vorteil ergibt sich dann, wenn zur Dämpfung von Vibrationen, wie im Unteranspruch 4 angegeben, wenigstens eine der sich gegenüberstehenden, zylindrischen Flächen des Schleifringträgers und des Stators der Lagereinheit mit einer dämpfenden Materialschicht versehen ist. Weitere Vorteile der Erfindung ergeben sich aus den übrigen Unteransprüchen und aus der Beschreibung. Die Erfindung wird nachfolgend anhand eines Ausführungsbeispiels näher erläutert.

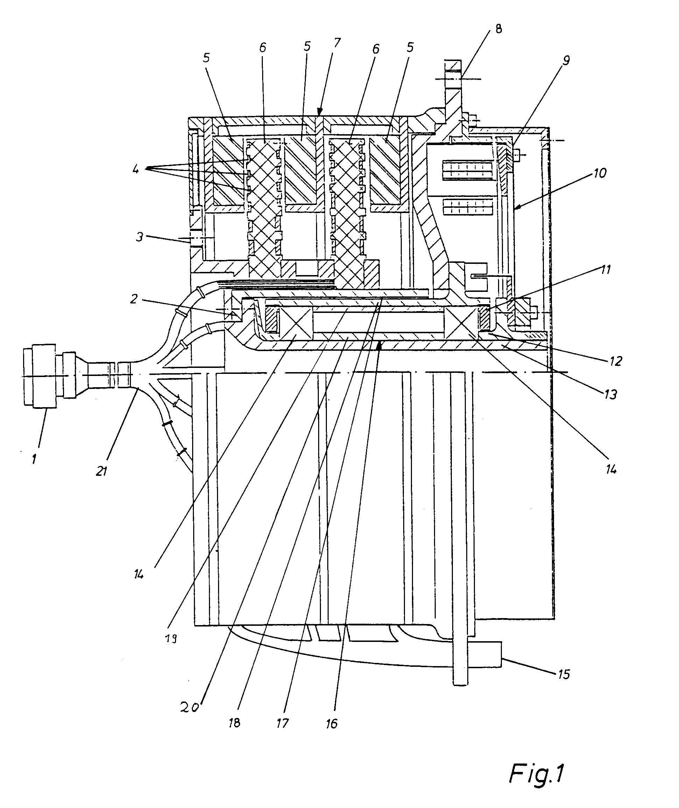

Die Fig. 1 zeigt in Schnittbilddarstellung einen Stellantrieb für eine Antenne, Sonnenkollektor o.ä.

In Fig. 1 ist mit 1 das elektrische Interface zur Antenne bzw. zum Sonnenkollektor (je nach Einsatz des Stellantriebs) dargestellt. Das elektrische Interface ist durch einen Kabelbaum 21 mit den auf den Schleifringscheiben 6 angeordneten Schleifringen 4, zur Übertragung der elektrischen Leistung oder der Signale, verbunden. Die Schleifringe 4 haben unterschiedlichen Querschnitt, um einerseits die Übertragung verschieden großer Leistung zu ermöglichen und andererseits auch für Signale kleiner Leistung ausreichend Übertragungskapazität zu haben.

Durch mehrere Schleifringbürsten (nicht dargestellt) pro Schleifring z. B. 4 zur Redundanz werden die elektrischen Signale von den Schleifringen 4 abgegriffen und über das elektrische Interface 15 der internen Satellitenstromversorgung bzw. der satelliteninternen Signalverarbeitung zugeführt.

Die Schleifringscheiben 6 sind auf dem zylindrischen Schleifringscheiben-Trager 2 befestigt, der mit geringem Luftspalt 17 einen wesentlichen Teil des zylindrischen Stators 18 der Lagereinheit 16 umgreift. Eine ähnliche Lageranordnung ist z.B. aus DE-A-3 500 716 bekannt.

Bei Vibrationen kann sich der schwere Schleifringscheiben-Träger 2 auf den zylindrischen Stator 18 abstützen, was zusätzlich eine Dämpfung der Vibrationen bewirkt.

Die dem geringen Luftspalt 17 zugewandten Flächen des zylindrischen Schleifringscheiben-Trägers 2 und des zylindrischen Stators 18 der Lagereinheit 16 können in dem einander übergreifenden Bereich mit einer Materialschicht (z.B. textilverstärktes Phenolharz oder glasfaserverstärktes Epoxyharz) versehen, die die Dämpfung bei Vibrationen noch verstärkt.

Die Lagereinheit 16 weist zwei Kugellager 14 auf, wobei die Kugellageraußenringe durch eine äußere Spannhülse 19 die Kugellagerinnenringe durch eine innere Spannhülse 20 in ihrem Abstand fixiert sind. Mittels zweier Spannringe 11, 12 werden die Kugellager 14 rotor- und statorseitig fixiert und damit die Vorspannung, die durch die Längendifferenz der Spannhülsen 19, 20 begrenzt wird, erzeugt. Rotorseitig ist die Lagerung direkt auf der Antriebswelle 13 befestigt, die an ihrem äußeren Ende ein mechanisches Interface 3 trägt, zum Anschluß eines hier nicht dargestellten Sonnenkollektors oder einer hier nicht dargestellten Antenne. Am gegenüberliegenden Ende der Lagereinheit 16 ist die Antriebseinheit 10 angeordnet.

Diese Antriebseinheit 10 besteht aus einem hochauflösenden Schrittmotor 9, der aus Redundanzgründen auch zweifach vorgesehen sein kann, wobei der zweite Schrittmotor nur arbeitet, wenn der erste Schrittmotor ausfällt.

Zum Schutz gegen die hohen Temperaturwechsel können an der äußeren Stirnseite des Stellantriebs und/oder an der inneren, der Schleifringanordnung 7 zugewandten Seite, Isolierplatten angeordnet werden.

## Patentansprüche

1. Stellantrieb innerhalb einer Satellitenstruktur, für eine, an dem Satelliten angeordnete, nachführbare Antenne, Sonnenkollektor o.ä., mit folgenden Teilen:
- eine Antriebseinheit, bestehend aus wenigstens einem Schrittmotor, insbesondere mit relativ großer radialer Ausdehnung, dessen Rotor an einem Ende mit einer Antriebswelle verbunden ist,
- eine Schleifringanordnung, die mit dem anderen Ende der Antriebswelle verbunden ist, zur Übertragung von Signalen und/oder elektrischer Energie,
- eine Lagereinheit zur axialen und radialen Lagerung der Antriebswelle zwischen deren beiden Enden, bestehend aus zwei mit konstanter Vorspannung eingestellten Wälzlagern,
dadurch gekennzeichnet,
daß die Antriebseinheit (10) in einem von der Satellitenaußenhaut entfernt liegenden Bereich im Inneren des Satelliten und die Schleifringanordnung (7) in der Nähe der Satellitenaußenhaut angeordnet sind, und daß die Schleifringanordnung (7) einen zylindrischen Schleifringträger (2) aufweist, der einen wesentlichen Teil des zylindrischen Stators (18) der Lagereinheit (16) mit geringem Luftspalt (17) umgreift.

2. Stellantrieb nach Anspruch 1, dadurch gekennzeichnet, daß die Schleifringanordnung (7) an der der inneren Satellitenaußenhaut zugewandten Fläche eine Wärmeabschirmung aufweist.

3. Stellantrieb nach Anspruch 1, dadurch gekennzeichnet, daß die innere Satellitenaußenhaut in einem Bereich, in welchem die Schleifringanordnung (7) angeordnet ist, eine Wärmeabschirmung aufweist.

4. Stellantrieb nach Anspruch 1, dadurch gekennzeichnet, daß wenigstens eine der sich gegenüberstehenden zylindrischen Flächen des Schleifringträgers (2) und des Stators (18) der Lagereinheit (16) mit einer dämpfenden Materialschicht versehen ist.

5. Stellantrieb nach einem der vorherigen Ansprüche, dadurch gekennzeichnet, daß aus Redundanzgründen ein weiterer Schrittmotor vorgesehen ist, dessen Rotor ebenfalls mit der Antriebswelle (13) verbunden ist.

## Claims

1. Setting drive within a satellite structure for a tracking antenna, solar panel or the like arranged at the satellite, comprising the following parts:
- a drive unit consisting of at least one stepping motor, especially with a relatively large radial extent, the rotor of which is connected at one end with a drive shaft,
- a wiper ring arrangement, which is connected with the other end of the drive shaft, for the transmission of signals and/or electrical energy, and
- a bearing unit for axial and radial mounting of the drive shaft between the two ends thereof, consisting of two roller bearings set up with constant bias,
characterised thereby,
- that the drive unit (10) is arranged in the interior of the satellite in a region remote from the outer skin of the satellite and the wiper ring arrangement (7) is arranged in the proximity of the satellite outer skin, and that the wiper ring arrangement (7) has a cylindrical wiper ring carrier (2) which engages around a substantial part of the cylindrical stator (18) of the bearing unit (16) with a small air gap (17).

2. Setting drive according to claim 1, characterised thereby that the wiper ring arrangement (7) has a heat shielding at the surface facing towards the internal outer skin of the satellite.

3. Setting drive according to claim 1, characterised thereby that the internal outer skin of the satellite has a heat shielding in a region in which the wiper arrangement (7) is arranged.

4. Setting drive according to claim 1, characterised thereby that at least one of the mutually opposite cylindrical surfaces of the wiper ring carrier (2) and of the stator (18) of the bearing unit (16) is provided with a damping material layer.

5. Setting device according to one of the foregoing claims, characterised thereby that for reasons of redundancy a further stepping motor is provided, the rotor of which is likewise connected with the drive shaft (13).

## Revendications

1. Dispositif entraîneur-positionneur à l'intérieur d'une structure de satellite, pour un capteur solaire, une antenne orientable ou analogue agencé(e) sur le satellite, comportant les parties suivantes:
- une unité d'entraînement constituée par au moins un moteur pas à pas, ayant notamment une dimension radiale relativement grande, dont le rotor est lié en une extrémité à l'arbre d'entraînement;
- un agencement de bagues collectrices qui est lié à l'autre extrémité de l'arbre d'entraînement et sert à transmettre des signaux et/ou de l'énergie électrique;
- un module-palier pour supporter axialement et radialement l'arbre d'entraînement entre ses deux extrémités, constitué par deux roulements mis sous précontrainte constante;
caractérisé
par le fait que l'unité d'entraînement (10) est agencée dans une région située à l'intérieur du satellite, à distance de la peau extérieure du satellite, et l'agencement de bagues collectrices (7) est situé à proximité de la peau extérieure du satellite, et par le fait que l'agencement de bagues collectrices (7) présente un support cylindrique (2) qui, avec un faible interstice (17), entoure une partie substantielle du stator cylindrique (18) du module-palier (16).

2. Dispositif entraîneur-positionneur selon revendication 1, caractérisé par le fait que l'agencement de bagues collectrices (7) présente un écran thermique sur la surface tournée vers la peau extérieure interne du satellite.

3. Dispositif entraîneur-positionneur selon revendication 1, caractérisé par le fait que la peau extérieure interne du satellite est située dans une région dans laquelle l'agencement de bagues collectrices (7) présente un écran thermique.

4. Dispositif entraîneur-positionneur selon revendication 1, caractérisé par le fait qu'une couche de matière atténuatrice ou amortissante est prévue sur au moins l'une des surfaces cylindriques en vis-à-vis que comportent le support (2) des bagues collectrices et le stator du module-palier (16).

5. Dispositif entraîneur-positionneur selon l'une des revendications précédentes, caractérisé par le fait qu'à des fins de redondance il est prévu un autre moteur pas à pas dont le rotor est lié à l'arbre d'entraînement (13).
